# EUROPEAN PATENT SPECIFICATION

(11) **EP 3 541 253 B1**
(45) Date of publication and mention of the grant of the patent: **04.10.2023**
(21) Application number: 17797944.0
(22) Date of filing: 15.11.2017
(51) Int. Cl.: A47J 31/46

(54) **PINCH VALVE ARRANGEMENT AND FOODSTUFF DISPENSING APPARATUS**
QUETSCHVENTILANORDNUNG UND NAHRUNGSMITTELAUSGABEVORRICHTUNG
SYSTÈME DE ROBINET À MANCHON ET APPAREIL DE DISTRIBUTION DE PRODUITS ALIMENTAIRES

(30) Priority: 17.11.2016 EP 16199271
(43) Date of publication of application: 25.09.2019
(73) Proprietor: Koninklijke Philips N.V., 5656 AG Eindhoven (NL)
(72) Inventor: NOORDHUIS, Joeke, 5656 AE Eindhoven (NL); SCHLECHT, Ruth, Anna, Elisabeth, 5656 AE Eindhoven (NL); TIBBE, Tim, Gerard, 5656 AE Eindhoven (NL)
(74) Representative: Vollering, Stefanus Franciscus Maria
(86) International application number: PCT/EP2017/079245
(87) International publication number: WO 2018/091485

(56) References cited:
- WO-A1-00/79160
- FR-A1- 2 726 454
- US-A1- 2004 001 906

## Description

### FIELD OF THE INVENTION

The disclosure invention generally relates to the field of pinch valves. A pinch valve is a type of control valve which uses a pinching effect to obstruct fluid flow therethrough. Pinch valves used for fluids usually employ a device that directly contacts a flow line or tubing. Forcing the tubing together creates a seal and blocks the fluid flow.

In an exemplary, non-limiting field of application the present disclosure relates to the area of appliances (generally referred to as beverage dispensers herein) that prepare a beverage via extraction of food substances through the passage of an extraction fluid, such as hot or cold water, under pressure. The food substance, such as coffee or tea, may be contained in consumables that are inserted in these appliances. A beverage may thus generally be coffee, tea, soup, hot or cold chocolate, milk, baby food, etc.

Another type of dispensers is arranged to process non-portioned loose or even powdered material, e.g. ground coffee, loose tea, etc. Further, particularly in the field of automatic coffee machines, the dispensers may be arranged to process intermediate products, e.g. coffee beans, which may involve also a grinding or milling procedure. Hence, not in each case the foodstuff product is pre-portioned and arranged in the form of a consumable.

Beverage dispensers, such as coffee making machines, typically incorporate at least one fluid circuit which may generally extend between a water supply or a water container, and an orifice or outlet opening for providing the prepared beverage. The fluid circuit may involve at least one valve which may be arranged as a pinch valve.

Further fields of application for pinch valves are known, for instance in medical instruments, clinical or chemical analyzers, and a wide range of laboratory equipment.

### BACKGROUND OF THE INVENTION

A beverage dispensing appliance is known from EP 2 543 291 A1. The document discloses a beverage production machine comprising a brewing head for the production of a beverage, the brewing head comprising a brewing chamber comprising at least two brewing chamber portions movable with respect to each other, a water heater, a hot water duct for feeding hot pressurized water in said brewing chamber from said water heater, a dispensing duct from which said beverage is dispensed, and a structural frame supporting said at least two brewing chamber portions, on which forces generated by the pressurized water in the brewing chamber during brewing are discharged, wherein said structural frame includes said water heater.

The consumables (also called single-serve units or disposable consumables) currently in use are basically of two types. One type of consumable is generally called a "capsule" and is basically a unit with rigid walls containing the food substance and that has two bases through which the extraction water passes. The capsules are placed into chambers defined by two bodies, one shaped to receive most of the capsule and a closing body which tightly seals the chamber. The water is introduced into the chamber and then traverses the capsule. Thanks to the rigid shape of the capsule, the hydraulic seals of the chamber allow the water to basically traverse the capsule without recirculating the extracted substance through the chamber.

A second type of consumable of a flat shape is generally called a "pod" (or "pad") and may consist of two sections made of thin soft material, cut and paired in order to define a cavity in which the food substance is placed. The material may be for example paper, or a cloth or a non-woven fabric with filtering properties. The two sections are generally circular and are coupled along their outer edges, defining an outer annular flange. The machines which use pods may have two half-shells which are sealed to define a chamber where the pod is placed. Specifically, the annular flange of the pod may be received between the opposite surfaces of the half-shells, defined outside the chamber. Generally, coffee-based pods may be regarded as pre-packaged ground coffee beans in their own filter.

US 2010/0064900 A1 discloses a beverage preparation machine comprising at least one pinch valve in the fluid line system, wherein the pinch valve encompasses at least two fluid passage lines and is designed to execute at least one of valve and control functions on the at least two fluid passage lines, wherein the pinch valve encompasses a linear activating mechanism of the at least one of valve and control functions of the fluid passage lines, which is adapted for a coupled activation of the at least two fluid passage lines, and wherein the pinch valve comprises a valve housing in which the fluid passage lines are located and an intermediate bolt being arranged in the valve housing between the at least two fluid passage lines. WO 2013/038165 A1 discloses another beverage preparation machine having a pinch valve.

US 8,622,365 B2 discloses a pinch valve comprising a body, an elastic conduit supported in the body and through which a fluid flows, a solenoid connected to the body and having a coil, the solenoid being excited by energizing the coil, for attracting a movable iron core toward a fixed iron core, a valve mechanism having a valve plug disposed to face towards the conduit and which is displaceable along an axial direction of the body, wherein the valve mechanism presses the valve plug towards the conduit by excitation of the solenoid, and an elastic means that urges the movable iron core towards the fixed iron core, wherein by displacement of the valve plug towards the conduit, the conduit is clamped between the valve plug and the body, to thereby interrupt the flow of the fluid.

US 6,957,798 B1 discloses a pinch valve for medical applications, the pinch valve comprising a housing that encloses a flexible tube; a first pinch element and a second pinch element, each being oriented on a respective axis of rotation transverse to an axis of extension of the tube, each of the first pinch element and the second pinch element being constructed and arranged to rotate with respect to each other between a fully closed and a fully open position; wherein each pinch element respectively defines a pinch region that confronts an outer wall of the tube to define a profile that surrounds substantially the outer perimeter of the tube.

US 4,303,222 discloses a pinch valve for industrial applications.

Operating a pinch valve is sometimes cumbersome and may require relatively high actuation forces for sufficiently blocking a flow through the valve. A potential reason for this is that in the pinching zone, slight leaks may be present when only a moderate level of actuation force is applied. To address this issue, actuators having respective power capacity may be chosen. As a result, the desired seal may be achieved. However, for reopening the pinch valve, the actuator force must be surmounted.

WO 00/79160 A1 discloses a modularized pinch valve comprising a tubular part comprising a tube and a tube pressing member regulating an opening/closing degree of an inner flow path of the tube, a liquid in/out flow part regulating a connection to the outside, and an operating part coupled with the tube pressing member to adjust a liquid flow amount in the valve.

US 2004/0001906 A1 discloses a sanitary manifold system for hygienically supplying a microbiologically sensitive fluid from a container to a dispensing unit, the system comprising a housing, a discharge line for delivering the microbiologically sensitive liquid, an interface port for establishing connection to the discharge line, and a cleaning fluid line assembly for supplying a cleaning or rinsing fluid to clean or rinse the discharge line, and which includes a projection member arranged to deliver cleaning or rinsing fluid, wherein an external valve is provided proximate the interface port to maintain the hose and package sterile and isolated to allow cleaning or rinsing of the hose from the interface port up to the closing point of the valve, and wherein the valve is a spring loaded pinch valve that that closes a portion of hose at a pinch point to demarcate a sterile part of the container at the pinch point.

FR 2 726 454 A1 discloses an apparatus comprising, in addition to a device capable of automatically preparing either an "espresso" coffee or a "long" coffee, a device for selecting "espresso" / "long" coffee once prepared, comprising a coffee dispensing member having an inlet for prepared coffee, an outlet for "espresso" coffee connected to a first flow tube and an outlet for the "long" coffee connected to a second flow tube. According to the invention, the two flow tubes are flexible tubes and the selection device comprises a tilting member which is driven by a manual control member with two selection positions, respectively for "espresso" coffee and "long" coffee, and which comprises two leading fingers able to selectively obstruct by pinching one or the other of said flexible tubes according to the selection position of the manual control unit.

As a result, at least in some cases, operating the valve and controlling a flow through the valve is impaired and complicated.

### SUMMARY OF THE INVENTION

It is an object of the present disclosure to provide a pinch valve arrangement that is operable with reduced actuation forces and that provides a tight seal, in an engaged state.

Furthermore, it is desired to provide a pinch valve that is robust and reliably switchable between a blocking state and a flow-through state. Further, it would be advantageous if the pinch valve arrangement was arranged to provide a self-opening feature, in response to a certain level of the hydrostatic pressure at an input side of the valve.

It is a further object of the present disclosure to provide a foodstuff dispensing apparatus that comprises a hydraulic circuit incorporating at least one pinch valve in accordance with at least on embodiment as discussed herein. Further, at least one beneficial use of a pinch valve arrangement shall be provided in the context of the present disclosure.

In a first aspect of the present disclosure, a pinch valve arrangement is presented as claimed in claim 1.

The above aspect boosts the pinching performance.

In accordance with the above aspect, a pinching performance boost feature incorporating an engagement protrusion is presented which enables an operation of the pinch valve arrangement with reduced actuation forces and an increased reliability. The engagement protrusion that is provided at the engagement element is arranged in such a way that at a defined, considerably small subsection of the valve portion a relatively high pressure or force is present that urges or squeezes the valve portion into the blocked or closed state. In other words, the engagement protrusion is arranged in such a way that an increased contact force level is present in an engaged state when the engagement element is urged against the valve portion.

An internal hydrostatic pressure of the blocked fluid generally may deform or expand the pressurized (upstream) side of the valve portion. Hence, in an at least partially expanded state, the valve portion may, at least partially, contact the offset section and apply a force thereto that is opposite to an engagement/sealing force.

A partial deformation of the valve portion may be therefore utilized as a lifting feature.

As used herein, the longitudinal extension is basically parallel to a main flow direction through, or a central axis, of the fluid line in the region of the valve portion. Hence, the longitudinal extension may also be referred to as an extension of the engagement element in the flow direction. Further, the fluid line also may be referred to as hose, conduit, tube or tubing, etc. Preferably, the fluid line is made from an elastic material or an elastomer material, involving silicone material, rubber material, synthetic rubber, such as EPDM rubber, ethylene propylene rubber (EPR), etc. Further, thermoplastic elastomers (TPE) may be used as well.

The engagement protrusion also may be referred to as squeezing protrusion that is arranged to squeeze the valve portion of the fluid line. Consequently, the valve section of the fluid line also may be referred to as squeeze section or pinch section.

By way of example, the engagement element may be arranged as an engagement stem, an engagement lever, or an engagement roll. Generally, an actuation mechanism may be provided that is arranged to move the engagement element into engagement with the valve portion of the fluid line. The movement of the engagement element may involve a basically linear movement or a swivel/rotatory movement of the engagement element.

In an embodiment of the pinch valve arrangement, the pinch valve arrangement comprises a non-circular cross section provided in the valve portion. Also in this case, the pinching performance of the pinch valve arrangement is improved. Accordingly, a pinching performance boost feature incorporating an a non-circular cross section provided in the valve portion is presented which enables an operation of the pinch valve arrangement with reduced actuation forces and an increased reliability. Further, a sealing boost is achieved due to the non-circular cross section and/or the engagement protrusion. The non-circular cross section that is provided in the valve portion is arranged in such a way that a relatively small movement of the engagement element, involving a relatively small actuation force, is sufficient to close or block the valve. The non-circular cross section of the valve portion is a non-ring shaped cross section.

A pinch valve arrangement in accordance with any embodiment as discussed herein may be used in a hydraulic circuit of a foodstuff dispensing apparatus, particularly a beverage dispending apparatus or a coffee maker.

In an exemplary embodiment of the pinch valve arrangement, the fluid line involves a hose in which the valve portion is formed, wherein the hose is an injection molded part or an extruded part, wherein the extruded part is deformed, after extruding but before a curing procedure, to form the valve portion. It is again noted that the non-circular cross section of the valve portion is also present in a non-biased state of the valve portion, i.e. when the valve portion is removed and separated from further components of the pinch valve arrangement.

In a further exemplary embodiment, the engagement element is, in a main extension direction of the fluid line that basically corresponds to a flow direction, arranged in a non-symmetrical fashion, involving an offset section and the engagement protrusion that protrudes beyond the offset section towards the valve portion of the fluid line. Further, the engagement protrusion may be arranged at a downstream end of the engagement element.

As a result, in an engaged state of the engagement element, primarily the engagement protrusion engages and is urged into the valve portion of the fluid line. Further, the offset section of the engagement element may be positioned, in the engaged state, adjacent to but not in contact with the valve portion of the fluid line. As a result, the contact force in the area of the engagement protrusion is significantly increased.

Further, the offset section is regarded as a lifting aid. If a fluid (liquid) pressure inside the hose is increasing and, consequently, expanding or otherwise elastically deforming the hose, an outer side of the hose eventually contacts the offset section and lift the engagement element, including the engagement protrusion, out of engagement with the valve portion. An expansion of the hose, in the valve portion, may involve a radial expansion and/or a circumferential expansion.

A further benefit of the above design of the engagement element is a self-opening and pressure relief feature in response to excess pressure. As a result, damages in the fluid circuit due to overpressure may be avoided. Hence, at least in some exemplary applications, a separate check valve or safety valve may be dispensed with.

In a further exemplary embodiment, the pinch valve arrangement further comprises a valve housing in which a mounting recess is formed, wherein at a side of the mounting recess that is opposite to the engagement element a fixed protrusion is formed that is adapted to the engagement protrusion of the engagement element, wherein the valve portion is clamped, at least in the engaged state, between the engagement protrusion and the fixed protrusion.

In an alternative exemplary embodiment, two opposite engagement elements are provided having respective actuators and engagement protrusions, wherein the engagement elements are approaching one another to pinch/squeeze the valve portion therebetween.

In a further exemplary embodiment of the arrangement, a flattened cross section is provided in the valve portion that is arranged in the mounting recess. Hence, a cavity for the valve portion is provided in which the valve portion is positioned and in which an engagement of the engagement element and the valve portion takes place. As already indicated above, the flattened cross section is also present in an unbiased state of the valve portion in which no internal/external forces are applied thereto.

In a further exemplary embodiment of the arrangement, the valve portion of the fluid line is a preformed section of a hose having a generally circular cross section. As a consequence, at least one of an upstream section or a downstream section of the hose may maintain the original circular cross section. Preferably, the fluid line involves a respectively preformed hose wherein the desired shape is already present in an unbiased state.

In a further exemplary embodiment of the arrangement, at least one differently shaped section of the hose is provided that is adjoining the valve portion and that comprises a circular cross section. In some embodiments, the differently shaped section is a non-preformed section. This may particularly apply to hoses that are based on an extruded or otherwise formed part having a generally circular cross section, wherein a deliberate deformation of the part is induced so as to form the non-circular cross section of the valve portion.

In a further exemplary arrangement, the valve portion comprises, in an unbiased state, an oval or rounded internal cross section, wherein a main extension of the internal cross section is perpendicular to an operating direction of the engagement element of the pinching unit. When an oval or rounded internal cross section rather than a circular cross section is present in the valve portion, a sealing or blocking of the valve can be accomplished already with reduced actuation power.

In another exemplary embodiment of the arrangement, the valve portion, in the unbiased state, comprises a flattened cross section, particularly an elliptical cross section or an elongated hole cross section.

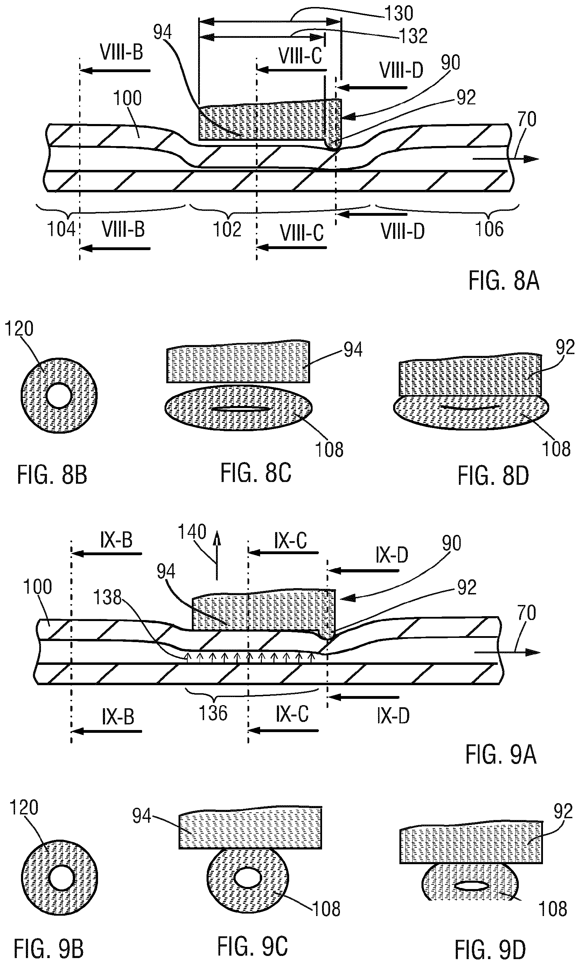

It has been observed that in valve portions of hoses for pinch valves that comprise, in an unbiased state, a circular cross section, a characteristic deformation is present when only a moderate pinching force is applied thereto. A resulting internal cross section may resemble a flattened infinity symbol (similar to a sideways shown figure 8). Particularly in edges of the pinched, originally circular cross section, leakage may be present which may be stopped only when a considerably larger pinching force is applied.

In accordance with the non-circular cross section of the valve portion that is presented in the context of the present disclosure, the minimum clamping force that sufficiently pinches and seals the valve is considerably smaller than with a circular cross section in the valve portion.

In a further exemplary embodiment of the arrangement, minimum radii of the non-circular cross section are, in an unbiased state, smaller than corresponding radii in an adjacent region of the fluid line. As a result, a leakage risk may be further reduced.

In yet another exemplary embodiment of the arrangement, an internal cross section of the valve portion comprises two lateral roundings having non-constant radii of curvature, wherein most lateral sections of the roundings comprise radii of curvature that are smaller than in adjacent sections of the roundings.

In yet another exemplary arrangement, the engagement protrusion is a laterally extending ridge having a main extension that is basically perpendicular to a flow direction of the fluid line in the valve portion. Generally, the flow direction may coincide with a central axis of the hose. Further, in at least some embodiments, the main extension of the laterally extending ridge defined by the engagement protrusion is basically perpendicular to a movement direction of the engagement element.

In yet another exemplary embodiment of the arrangement, the engagement protrusion is, in the engaged state, arranged to provide a defined, limited contact area between the engagement element and the valve portion. The reduced contact area may involve one of a line contact or an edge contact between the valve portion and the engagement element.

In the engaged state, an interference zone or engagement zone between the engagement element and the valve portion may resemble a narrow strap. As a consequence, an increased contact pressure which may be provided even though an overall engagement force is not increased or even reduced. Further, an increased surface load basically results in an increased sealing performance.

In yet another exemplary embodiment of the arrangement, a longitudinal extension of the offset section is more than 80 %, preferably more than 90 % of an overall longitudinal extension of the engagement element.

In yet another exemplary embodiment of the arrangement, a longitudinal extension of the engagement protrusion is less than 20 %, preferably less than 10 % of an overall longitudinal extension of the engagement element. In combination, the longitudinal extensions of the engagement protrusion and the offset section may correspond to the overall longitudinal extension of the engagement element.

In yet another exemplary embodiment, the arrangement further comprises an actuator that is arranged to operate the engagement element between an engaged state and a disengaged state, wherein a flow through the fluid line is blocked in the engaged state, and wherein a flow through the fluid line is enabled in the disengaged state. As discussed above, in the engaged state at least a substantial blocking of a flow through the fluid line may be present. The actuator may involve a motorized or powered actuator, for instance an electromagnetic actuator. Further, the actuator may cooperate with a biasing element, for instance a spring that urges the engagement element either into the engaged state or into the disengaged state.

Further, in alternative embodiments, the pinch valve arrangement may be arranged to be operated from the outside. Hence, not in each case an active actuator forms part of the arrangement. For instance, manually actuable arrangements may be envisaged. To this end, an actuation mechanism may be provided that is arranged for manual operation.

In yet another exemplary embodiment of the arrangement, the engagement protrusion is provided at a downstream end of the engagement element.

According to the invention, the engagement section further comprises an offset section that is rearwardly displaced from the engagement protrusion. Further, the offset section may be displaced in an upstream direction from the engagement protrusion. By way of example, the offset section may form a relatively flat surface from which the engagement protrusion projects towards the valve portion of the fluid line.

In other words, when the engagement element is brought into contact with the valve portion, first the engagement protrusion contacts the valve portion. Depending on a present level of an applied actuating force, the offset section may eventually contact the valve portion, but not penetrating or deforming the valve portion as much as the engagement protrusion, or approach but not contact the valve portion.

In this way, the offset section does not directly contribute to a sealing or blocking action. However, the offset section may be regarded as a lifting aid as the offset section may be engaged and pushed away when the valve portion of the fluid line is expanded, due to an internal fluid pressure. This may greatly simplify a disengagement of the engagement element and, consequently, a switching of the pinch valve to an opened state.

In yet another exemplary embodiment of the arrangement, the offset section is, when the engagement protrusion engages the valve portion for blocking a flow through the fluid line, adjacent to but offset from a section of the valve portion that is facing the offset section. Hence, the offset section may also be referred to as rebound section or lifting section when the valve portion is at least partially expanded and acting thereon.

In at least some exemplary embodiments, the pinch valve arrangement may be operable as a pressure relief valve or an overpressure valve.

In a further exemplary embodiment of the arrangement, the hose that forms the fluid line, particularly the valve portion thereof, is provided with a deformation limiting feature. The deformation limiting feature may involve at least one of a protective sheathing and a confined arrangement in a valve housing. In this way, an exceeding deformation of the hose and/or or the valve portion, in response to high internal pressure, may be prevented.

In another aspect of the present disclosure, a foodstuff dispensing apparatus is presented, the apparatus comprising a hydraulic circuit incorporating at least one pinch valve arrangement in accordance with at least one embodiment as discussed herein. By way of example, the pinch valve arrangement may be provided in a supply line for pressurized and/or heated water of a coffee making machine. Further fields of application and further uses in foodstuff dispensing apparatuses, particularly in beverage dispensing apparatuses may be envisaged.

In yet another aspect of the present disclosure, a use of a pinch valve arrangement in accordance with at least one embodiment as discussed herein is proposed, particularly a use in a foodstuff dispensing apparatus, particularly a beverage dispensing apparatus or a beverage preparation apparatus.

### BRIEF DESCRIPTION OF THE DRAWINGS

These and other aspects of the disclosure will be apparent from and elucidated with reference to the embodiments described hereinafter. In the following drawings
Fig. 1 shows a perspective view of an exemplary embodiment of a beverage dispenser, particularly a coffee making appliance,
Fig. 2 shows a simplified schematic layout of an exemplary arrangement of a hydraulic circuit for a beverage dispensing apparatus that is arranged as a coffee maker;
Fig. 3 is a side view of an exemplary embodiment of a pinch valve arrangement;
Fig. 4 is an exploded cross-sectional view of the arrangement of Fig. 3, wherein the view scale in Fig. 3 and Fig. 4 is not the same;
Fig. 5 is a perspective exploded view of the arrangement of Fig. 3 and Fig. 4;
Fig. 6 is a perspective exploded view of the arrangement of Fig. 5, involving a different view orientation;
Fig. 7 is a perspective view of an actuator involving an engagement element for a pinch valve arrangement wherein a view orientation of Fig. 7 corresponds to the view orientation of Fig. 6;
Fig. 8a shows a simplified cross-sectional view of an exemplary arrangement of a pinch valve in an engaged state;
Fig. 8b shows a cross-sectional view of the arrangement of Fig. 8a along the line VIII-B - VIII-B;
Fig. 8c shows a cross-sectional view of the arrangement of Fig. 8a along the line VIII-C - VIII-C;
Fig. 8d shows a cross-sectional view of the arrangement of Fig. 8a along the line VIII-D - VIII-D;
Fig. 9a shows another cross-sectional view of the arrangement of Fig. 8a, wherein a valve portion of a fluid line is deformed in response to an internal hydrostatic pressure;
Fig. 9b shows a cross-sectional view of the arrangement of Fig. 9a along the line IX-B - IX-B;
Fig. 9c shows a cross-sectional view of the arrangement of Fig. 9a along the line IX-C - IX-C; and
Fig. 9d shows a cross-sectional view of the arrangement of Fig. 9a along the line IX-D - IX-D.

### DETAILED DESCRIPTION OF THE EMBODIMENTS

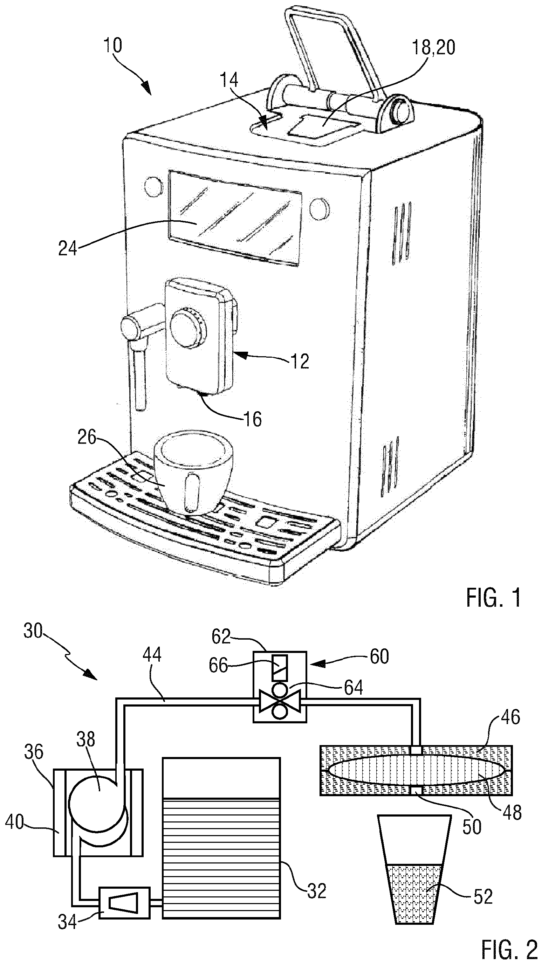

Fig. 1 shows a perspective view of a dispenser 10 which also may be referred to as coffee making appliance hereinafter. The dispenser 10 may generally, together with consumables 30 (refer also to Fig. 2), form a beverage preparation system. Typically, the dispenser 10 uses capsules as consumables. However, this shall not be interpreted in a limiting sensor. Further types of dispensers are known that are arranged to process pod-like or pad-like consumables.

In some embodiments, the beverage dispenser 10 is configured to be used for making other beverages than coffee, e.g. tea, hot or cold milk, soup, baby food, etc. Further, the consumables generally contain a corresponding food substance for the preparation of the respective beverage by use of the beverage dispenser.

Further, particularly in the field of automatic coffee machines, the dispensers may be arranged to process coffee beans, for instance, which involves also a grinding or milling procedure.

With respect to the dispenser 10, particular reference is made to EP 2 543 291 A1. The dispenser 10 may comprise a dispensing head 12 from which a processed product, particularly a processed beverage, may be obtained. The dispensing head 12 may comprise an outlet portion 16 including an outlet duct to fill a container or cup 26 with the foodstuff product. The dispenser 10 may further comprise a processing unit 14 which will be described further below in more detail. The processing unit 14 is configured to receive and process consumables, particularly capsules containing food substances, such as ground coffee-based products. By way of example, the processing unit 14 may comprise a receiving portion 18 and a sealing portion 20 for receiving and sealing a to-be-processed consumable (not shown in detail in Fig. 1). Furthermore, user controls 24 may be provided that may comprise a display, a touchscreen, switches, control buttons, etc.

Fig. 2 shows a simplified schematic layout of a water circuit or hydraulic circuit 30 for a foodstuff dispensing or beverage dispensing apparatus. The hydraulic circuit 30 involves a water container 32. Needless to say, the hydraulic circuit 30, in an alternative embodiment, may be permanently connected to a supply line. In accordance with the embodiment of Fig. 2, the water container 32 supplies the hydraulic circuit 30 with water. For propelling and pressurizing the water, a pump 34 is provided. Further, a so-called water block 36 is provided. The water block 36 may also be referred to as thermo block. In the water block 36, a spiral line section 38 is formed. Further, heating elements 40 are provided. The heating elements 40 may form a resistance heating arrangement, for instance. When the water that is propelled by the pump 34 flows through the spiral (coil) line section 38, the water will be heated.

In Fig. 2, a fluid line or feed line is indicated by reference numeral 44. By way of example, the fluid line 44 extends between the water block 36 and a processing chamber 46. In the processing chamber 46, a consumable 48 which may be arranged as a capsule or a pod is contained. When a respective appliance is arranged as a coffee making appliance, ground coffee is contained in the consumable 48. The processing fluid, particularly water, that is pressurized by the pump 34 and heated by the water block 36, is fed by the line 44, and enters the processing chamber 46 and flows through the consumable 48 involving the preparation of a beverage that eventually flows through an outlet opening 50 into a cup or a similar container in which then the prepared foodstuff product 52, particularly coffee or a coffee-based product, is contained and provided for consumption.

In the fluid line 44, a pinch valve arrangement 60 is provided. The pinch valve arrangement 60 is schematically illustrated in Fig. 2. The pinch valve arrangement 60 comprises a housing 62 and a pinching unit 64 arranged in the housing 62. The pinching unit 64 comprises an actuator 66 that is arranged to pinch a line or tube section of the fluid line 44. A general advantage of the pinch valve arrangement 60 is that the actuator 66 has no direct contact with the fluid that flows through the fluid line 44.

In a foodstuff processing apparatus, refer to the exemplary arrangement of the dispenser 10 as shown in Fig. 1, several valves may be provided. Therefore, a respective pinch valve arrangement may be used for another purpose and/or in another module of the apparatus than the pinch valve arrangement 60 illustratively shown in Fig. 2.

Further, it is to be noted that further, alternative layouts of hydraulic circuits that are different from the layout illustrated in Fig. 2 may be envisaged. Therefore, the above shall not be interpreted in a limiting sense.

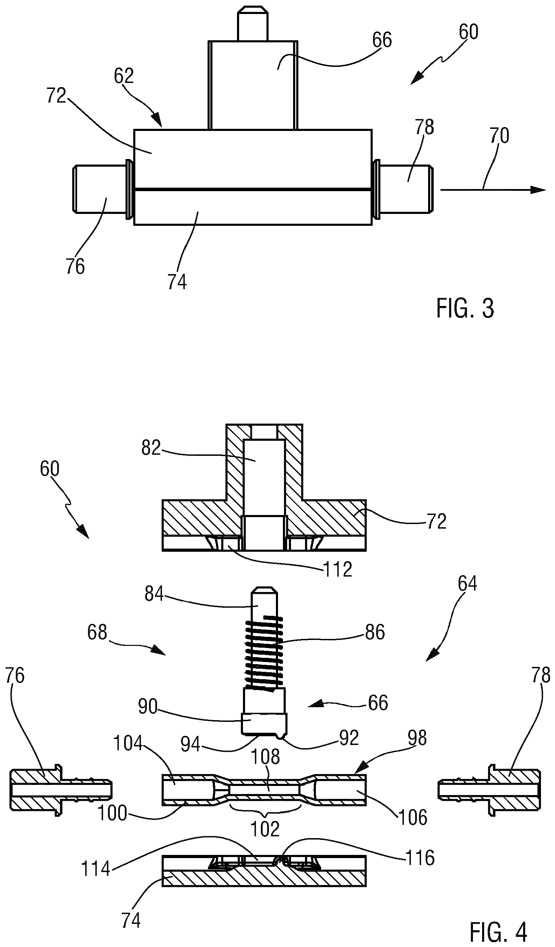

In the following, a more detailed design of an exemplary embodiment of a pinch valve arrangement 60 will be described with reference to Fig. 3 to Fig. 7.

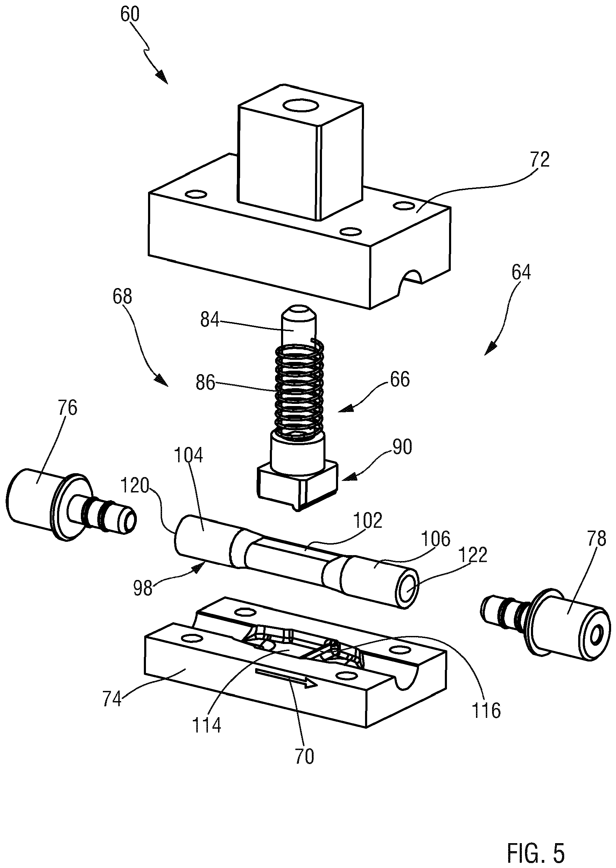

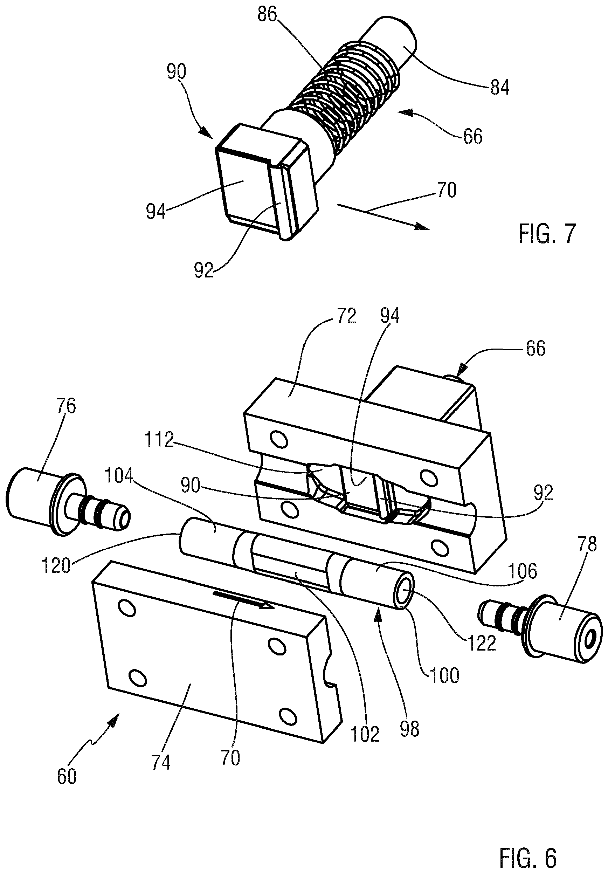

In Fig. 3, a lateral view of a pinch valve arrangement 60 is shown. Fig. 4 shows a corresponding cross-sectional exploded view showing internal components of the pinch valve arrangement 60. Further reference is made to Fig. 5 and Fig. 6, respectively illustrating perspective exploded views of the pinch valve arrangement 60. Fig. 7 is a supplement to Fig. 6, illustrating internal components of the pinch valve arrangement 60 that are only partially visible in Fig. 6.

As can be best seen in Fig. 3 and Fig. 4, the pinch valve arrangement 60 comprises a housing 62. In the housing 62, a pinching unit 64 is provided that comprises an actuator 66. The pinch valve arrangement 60 further comprises a pinch performance boost feature 68 implementing a specific design of components of the pinching unit 64.

In at least some of the Figures shown herein, a flow direction 70 in the region of the pinch valve arrangement 60 is indicated by an arrow 70. The flow direction 70 is basically parallel to a longitudinal direction which is used herein for describing spatial relationships and design features herein.

In accordance with the exemplary embodiment of Figs. 3 to 7, the housing 62 comprises a first housing portion 62 and a second housing portion 64. As can be best seen in Fig. 5 and Fig. 6, the housing portions 72, 74 are arranged to contain components of the pinching unit 64 therebetween.

An inlet of the pinch valve arrangement 60 is formed by an inlet stud 76. An outlet of the pinch valve arrangement 60 is formed by an outlet stud 78. It is to be noted for the sake of clarity that not in each case separate and distinct studs are necessary to form the inlet 76 and the outlet 78. As a consequence, the respective arrangement as shown in Fig. 3 to Fig. 6 shall not be interpreted in a limiting sense. On a functional level, in either case an inlet 76 or an outlet 78 for the flow is provided, and not necessarily involving distinct studs.

As can be best seen in Fig. 4, an actuator guide 82 is formed in the housing portion 72 of the housing 62. The actuator 66 comprises an actuator shaft 84 and a biasing element 86. The actuator shaft 84 and the biasing element 86 are movably received in the actuator guide 82 in the mounted state of the pinch valve arrangement 60. The biasing element 86 rests against a stop provided by a respective wall of the actuator guide 82. Hence, the biasing element 86 is arranged to urge the actuator shaft 84 into an engaged state.

As already indicated further above, the actuator 66 may be arranged as an electromagnet, for instance. Generally, the actuator 66 may be arranged as a powered or motorized actuator. The actuator 66 may be arranged in such a way that in a power-off state, the biasing element 86 urges the actuator shaft 84 into an engaged state. Hence, in a power-on state, a biasing force provided by the biasing element 86 may be surmounted and hence the actuator shaft 84 may be moved into a disengaged state.

The actuator 66 further involves an engagement element 90 which can be best seen in Fig. 7. A view orientation of Fig. 7 corresponds to a view orientation of the exploded view of Fig. 6.

The engagement element 90 is formed as a block at an end of the actuator shaft 84. The engagement element 90 forms a front portion or front face of the actuator shaft 84. Further, the engagement element 90 involves an engagement protrusion 92 and an offset portion 94, wherein the engagement protrusion 92 projects beyond a generally flat surface of the offset portion 94, refer also to Fig. 4.

The actuator 66 is arranged to operate the engagement element 90 between an engaged and a disengaged state with respect to a fluid line 92 that extends through the pinch valve arrangement 60. The fluid line 98 involves a hose 100 which may also be referred to as conduit or tube. In the fluid line 98, a valve portion 102 is provided. Further, adjacent portions of the fluid line 98 involve an upstream section 104 and a downstream section 106. The sections 104, 106 may be regarded as non-preformed sections. By contrast, the valve portion 102 may be regarded as a preformed section.

In accordance with at least some embodiments as discussed herein, the fluid line 98 involves a preformed hose 100 comprising the valve portion 102 that is configured to cooperate with and to be engaged by the engagement element 90 of the actuator 66 so as to selectively block or release a flow through the pinch valve arrangement 60.

As already discussed before, the fluid line 98 may be formed by injection molding. Further, the fluid line 98 may be based on an intermediate extruded hose having a circular cross section which is processed accordingly so as to form the valve portion 102. In either case, it is preferred that the unique shape involving the valve portion 102 having a non-circular cross section 108 is already present in an unbiased state of the fluid line 98.

The non-circular cross section 108 of the valve portion 102 may be arranged as a flattened, oval and/or elliptical cross section. By contrast, in the neighboring sections 104, 106 that are not preformed in accordance with the valve portion 102, basically circular cross sections 120, 122 may be present.

In the housing 62 of the pinch valve arrangement 60, a mounting recess is formed, exemplarily involving a mounting recess 112 in the housing portion 72 and a mounting recess 114 in the housing portion 74, refer to Fig. 5 and to Fig. 6.

The fluid line 98 is arranged to be inserted and accommodated in the mounting recesses 112, 114. The mounting recesses 112, 114 respectively involve a widening so as to provide sufficient room to accommodate the preformed valve portion 102. In accordance with the embodiment as shown in Fig. 3 to Fig. 6, the mounting recesses 112, 114 further comprise downstream and upstream cylindrical sections that are adapted to the non-preformed sections 104, 106 of the fluid line 98. As a consequence of the unique shape of the fluid line 98 and of the respectively adapted mounting recesses 112, 114, the fluid line 98 is accommodated in the housing 62 in a defined and considerably slip-proof fashion.

In the mounting recess 112 in the housing portion 72, a cut-out or recess is provided that is adapted to the shape of the engagement element 90. Hence, the engagement element 90 extends through and is slidably movable with respect to the mounting recess 112.

At the opposite mounting recess 114 that is provided at the housing portion 74, a fixed protrusion 116 is formed. The fixed protrusion 116 is arranged as a ridge extending towards the fluid line 98 and towards the opposite mounting recess 112. A main extension direction of the fixed protrusion 116 is basically perpendicular to the longitudinal direction of flow direction 70 and to a main extension direction or movement direction of the actuator 66.

As can be best seen in Fig. 4 and Fig. 6, also the engagement protrusion 92 of the engagement element 90 extends in a basically lateral direction that is perpendicular to the longitudinal direction and to a movement direction of the actuator 66. Further, as can be best seen in Fig. 4, the engagement protrusion 92 and the fixed protrusion 116 are arranged at opposite sides of the valve portion 102 of the fluid line 98 at a similar or even the same longitudinal (axial) position.

In an engaged state of the engagement element 90, the engagement protrusion 92 and the fixed protrusion 116 squeeze or pinch the valve portion 102 of the fluid line 98 therebetween.

Further reference is made to Fig. 8a, supplemented by Fig. 8b, Fig. 8c and Fig. 8d. Additional reference is made to Fig. 9a, supplemented by Fig. 9b, Fig. 9c, and Fig. 9d.

Fig. 8a and Fig. 9b respectively show a simplified schematic cross-sectional lateral view of a valve portion 102 of a hose 100 that is arranged to be used in a pinch valve arrangement 60 as discussed hereinbefore with reference to Fig. 3 to Fig. 7. In Fig. 8a and Fig. 9a, a respective engagement element 90 is partially shown in an at least partially engaged state.

Fig. 8b, Fig. 8c and Fig. 8d illustrate cross-sectional views at different longitudinal (axial) positions of Fig. 8a. Fig. 9b, Fig. 9c, and Fig. 9d illustrate respective cross-sectional views at different longitudinal (axial) positions in Fig. 9a.

In Fig. 8a, the engagement element 90 is urged against the valve portion 102 which involves a deformation in a certain region thereof, refer also to Fig. 8d and to the corresponding line VIII-D - VIII-D in Fig. 8a. Hence, the valve portion 102 is sealed and the flow through the hose 100 is blocked. Fig. 8b illustrates a cross section 120 in section 104, refer to the line VIII-B - VIII-B in Fig. 8a. The cross section 120 in Fig. 8b is circular. Fig. 8c illustrates a further cross section 108 in the valve portion 102, refer to the line VIII-C - VIII-C in Fig. 8a.

In Fig. 8c, a non-circular cross section 108 is shown which, however, is not perfectly blocked or sealed. By contrast, in Fig. 8d, the non-circular cross section 108 is perfectly blocked and sealed as the engagement protrusion 92 squeezes the valve portion 102 in this area. By contrast, upstream of the engagement protrusion 92, an offset portion 94 is formed at the engagement element 90 which is adjacent to but not in direct contact with the hose 100 in the valve portion 102, refer also to Fig. 8c. Hence, only in a small subsection of the valve portion 102 a direct contact with the engagement protrusion 92 is provided, resulting in high contact force and a high deformation level which boosts the sealing feature.

In Fig. 8, an overall longitudinal extension of the engagement element 90 is indicated by reference numeral 130. Further, an overall longitudinal extension of the offset portion 94 is indicated by reference numeral 132. A difference between the longitudinal extension 130 and the longitudinal extension 132 corresponds to the longitudinal extension of the engagement protrusion 92. Needless to say, the engagement protrusion 92 may involve a tapered, rounded or even pointed edge that is facing the valve portion 102 and that penetrates into the hose 100 in the state shown in Fig. 8a and Fig. 8d.

Fig. 9a shows an arrangement that basically corresponds to the arrangement of Fig. 8. Further, also Fig. 9b, Fig. 9c, and Fig. 9d basically correspond to Fig. 8b, Fig. 8c, and Fig. 8d, respectively.

In Fig. 9a, also the engagement element 90 is shown in an at least partially engaged state, wherein the engagement protrusion 92 at least partially penetrates into the hose 100, refer to Fig. 9a and to Fig. 9d.

However, in a lifting zone 136 an axial position of which basically corresponds to the longitudinal extension 132 of the offset portion 94, a hydrostatic pressure or lifting pressure is indicated by a plurality of arrows 138.

Starting from the sealed state as shown in Fig. 8a, when an (internal) hydrostatic pressure is increased, the valve portion 102 is at least partially deformed or (circumferentially) expanded, particularly in the lifting zone 136. It is noted that, in at least some embodiments, adjacent portions of the hose 100, particularly the sections 104 and 106 are accommodated in the housing 62 (refer to Fig. 5 and to Fig. 6) in a generally confined and constrained fashion, i.e. no expansion or only a minor expansion of the hose 100 is possible in the sections 104, 106.

Hence, when a respective lifting pressure 138 is present in the lifting zone 136, an expansion of the hose 100 urges a wall portion of the hose 100 that is in close proximity to the offset portion 94 in Fig. 8a into contact with the offset portion 94, as shown in Fig. 9a. As a result, a lifting force 140 is generated which urges the engagement element 90 involving the engagement protrusion 92 out of engagement with the valve portion 102. As a consequence, as shown in Fig. 9d, a flow through the valve portion 102 is enabled and the seal as shown in Fig. 8b is no longer present. However, still the cross sections 108 as shown in Fig. 9c and Fig. 9d are non-circular. By contrast, the cross section 120 is shown as shown in Fig. 9b is still circular.

If no contact between the hose 100 and the offset portion 94 in the lifting zone 136 was possible, no lifting force or only a fraction of the lifting force 140 illustrated in Fig. 9a could be applied to the engagement element 90. Hence, in accordance with the embodiment illustrated in connection with Fig. 8a to Fig. 9d, an internal opening or lifting force for the actuator 66 of the pinch valve arrangement 60 (refer to Fig. 5) is significantly reduced.

Further, needless to say, also the arrangement as discussed in connection with Fig. 8a to Fig. 9d may incorporate a fixed protrusion 116 as shown in Fig. 4 and Fig. 5 which is opposite to the engagement protrusion 92 of the engagement element 90, and which is arranged to cooperate with the engagement protrusion 92 to pinch or squeeze a respective section of the valve portion 102.

While the invention has been illustrated and described in detail in the drawings and foregoing description, such illustration and description are to be considered illustrative or exemplary and not restrictive; the invention is not limited to the disclosed embodiments but defined by the scope of the appended claims.

In the claims, the word "comprising" does not exclude other elements or steps, and the indefinite article "a" or "an" does not exclude a plurality. A single element or other unit may fulfill the functions of several items recited in the claims.

Any reference signs in the claims should not be construed as limiting the scope.

## Claims

1. A pinch valve arrangement (60) arranged to be used in a hydraulic circuit (30), the pinch valve arrangement (60) comprising:
- an at least sectionally deformable fluid line (98),
- a pinching unit (64) comprising an engagement element (90) that is arranged to engage and deform a defined valve portion (102) of the fluid line (98) for controlling a fluid flow through the fluid line (98), and
- an engagement protrusion (92) at the engagement element (90),
wherein the engagement protrusion (92) occupies a subsection of a longitudinal extension of the engagement element (90),
wherein a main extension direction of the engagement protrusion (92) is perpendicular to the longitudinal dimension of the engagement element (90),
**characterized in that**
the engagement element (90) further comprises an offset section (94) that is rearwardly displaced from the engagement protrusion (92), and
wherein the engagement protrusion (92) is arranged at a downstream end of the engagement element (90),
wherein the offset section (94) is arranged as a disengagement aid, and wherein, in an engaged state of the engagement element (90), a deformation of the valve portion (102) at a pressurized side thereof urges the offset section (94) and thus the engagement element (90) into a disengaged state.

2. The arrangement (60) as claimed in claim 1, further comprising a valve housing (62) in which a mounting recess (112, 114) is formed, wherein at a side of the mounting recess (112, 114) that is opposite to the engagement element (90) a fixed protrusion (116) is formed that is adapted to the engagement protrusion (92) of the engagement element (90), wherein the valve portion (102) is clamped, at least in the engaged state, between the engagement protrusion (92) and the fixed protrusion (116).

3. The arrangement (60) as claimed in claim 1 or 2, further comprising a non-circular cross-section (108) in the valve portion (102) that is arranged in the mounting recess (112, 114).

4. The arrangement (60) as claimed in claim 3, wherein the non-circular cross-section (108) in the valve portion (102) is a flattened cross-section.

5. The arrangement (60) as claimed in any of the preceding claims, wherein the valve portion (102) of the fluid line (98) is a preformed section of a hose (100) having a generally circular cross section (120, 122).

6. The arrangement (60) as claimed in claim 5, wherein at least one differently shaped section (104, 106) of the hose that is adjoining the valve portion (102) comprises a circular cross section (120, 122).

7. The arrangement (60) as claimed in any of the preceding claims, wherein the valve portion (102) comprises, in an unbiased state, an oval or rounded internal cross section (108), and wherein a main extension of the internal cross section (108) is perpendicular to an operating direction of the engagement element (90) of the pinching unit (64).

8. The arrangement (60) as claimed in any of the preceding claims, wherein, in an unbiased state, minimum radii of the non-circular cross section (108) are smaller than corresponding radii in an adjacent region of the fluid line (98).

9. The arrangement (60) as claimed in any of the preceding claims, wherein the engagement protrusion (92) is a laterally extending ridge having a main extension that is basically perpendicular to a flow direction of the fluid line (98) in the valve portion (102).

10. The arrangement (60) as claimed in any of the preceding claims, further comprising an actuator (66) that is arranged to operate the engagement element (90) between an engaged state and a disengaged state, wherein a flow through the fluid line (98) is blocked in the engaged state, and wherein a flow through the fluid line (98) is enabled in the disengaged state.

11. A foodstuff dispensing apparatus (10) comprising a hydraulic circuit (30) incorporating at least one pinch valve arrangement (60) as claimed in any of the preceding claims.

12. A use of a pinch valve arrangement (60) as claimed in any of claims 1 to 10 in a foodstuff dispensing apparatus (10), particularly a beverage dispensing apparatus or a beverage preparation apparatus.

## Patentansprüche

1. Anordnung von Quetschventilen (60) für den Einsatz in einem Hydraulikkreis (30), wobei die Anordnung der Quetschventile (60) wie folgt ausgebildet ist:
- Eine zumindest abschnittsverformbare Fluidleitung (98),
- eine Quetscheinheit (64), die ein Eingriffselement (90) umfasst, das so angeordnet ist, um einen definierten Ventilabschnitt (102) der Fluidleitung (98) zur Steuerung eines Fluidstroms durch die Fluidleitung (98) einzulegen und zu verformen, und
- ein Eingriffsvorsprung (92) am Eingriffselement (90), wobei der Eingriffsvorsprung (92) einen Teilabschnitt einer Längsverlängerung des Eingriffselements (90) einnimmt, wobei eine Haupterstreckungsrichtung des Eingriffsvorsprungs (92) senkrecht zur Längsabmessung des Eingriffselements (90) ist, **dadurch gekennzeichnet, dass** das Eingriffselement (90) ferner einen aus dem Eingriffsvorsprung (92) nach hinten verschobenen Versatzabschnitt (94) auf weist, und der Eingriffsvorsprung (92) an einem nachgeschalteten Ende des Eingriffselements (90) angeordnet ist, wobei der versetzte Abschnitt (94) als Ausrückhilfe angeordnet ist und in einem eingerückten Zustand des Einrückelements (90) eine Verformung des Ventilabschnitts (102) an einer Druckseite davon den versetzten Abschnitt (94) und damit das Einrückelement (90) in einen ausgerückten Zustand drängt.

2. Anordnung (60) nach Anspruch 1, die ferner ein Ventilgehäuse (62) umfasst, in dem eine Montageaussparung (112, 114) ausgebildet ist, wobei an einer dem Einrückelement (90) gegenüber liegenden Seite der Montageaussparung (112, 114) ein fester Vorsprung (116) ausgebildet ist, der an den Einrückvorsprung (92) des Einrückelements (90) angepasst ist, wobei der Ventilabschnitt (102) zwischen dem Einrücküberstand (92) und dem festen Überstand (116) zumindest im eingerückten Zustand geklemmt ist.

3. Die Anordnung (60) nach Anspruch 1 oder 2, die daneben eine nicht-Kreisförmiger Querschnitt (108) im Ventilteil (102) umfasst, der in der Montagemulde (112, 114) angeordnet ist.

4. Anordnung (60) nach Anspruch 3, **dadurch gekennzeichnet, dass** der nichtkreisförmige Kreuzabschnitt (108) im Ventilteil (102) ein abgeflachter Querschnitt ist.

5. Anordnung (60) nach einem der vorhergehenden Ansprüche, **dadurch gekennzeichnet, dass** der Ventilabschnitt (102) der Fluidleitung (98) ein vorgeformter Abschnitt eines Schlauchs (100) mit einem allgemein kreisförmigen Querschnitt (120, 122) ist.

6. Anordnung (60) nach Anspruch 5, **dadurch gekennzeichnet, dass** mindestens ein anders angeordnet Formabschnitt (104, 106) des Schlauchs, der an den Ventilabschnitt (102) angrenzt, einen kreisförmigen Querschnitt (120, 122) aufweist.

7. Anordnung (60) nach einem der vorhergehenden Ansprüche, **dadurch gekennzeichnet, dass** der Ventilabschnitt (102) in unvoreingenommenem Zustand einen ovalen oder abgerundeten Innenquerschnitt (108) umfasst, wobei eine Haupterweiterung des Innenquerschnitts (108) senkrecht zu einer Arbeitsrichtung des Eingriffselements (90) der Quetscheinheit (64) ist.

8. Anordnung (60) nach einem der vorangehenden Ansprüche, **dadurch gekennzeichnet, dass** in unvoreingenommener Zustand, Mindestradien des nichtkreisförmigen Querschnitts (108) kleiner als entsprechende Radien in einem angrenzenden Bereich der Fluidleitung (98) sind.

9. Anordnung (60) nach einem der vorhergehenden Ansprüche, **dadurch gekennzeichnet, dass** der Einrückvorsprung (92) ein sich seitlich erstreckender Bergrücken mit einer Haupterweiterung ist, die im Wesentlichen senkrecht zu einer Strömungsrichtung der Fluidleitung (98) im Ventilabschnitt (102) steht.

10. Anordnung (60) nach einem der vorhergehenden Ansprüche, die ein Betätigungselement (66) vorsieht, das angeordnet ist, um das Einrückelement (90) zwischen einem eingerückten und einem ausgerückten Zustand zu betätigen, wobei ein Durchfluss durch die Fluidleitung (98) im eingerückten Zustand blockiert ist und wobei ein Durchfluss durch die Fluidleitung (98) im ausgerückten Zustand aktiviert ist.

11. Lebensmittelabgabegerät (10) mit einem Hydraulikkreis (30), mindestens mit einer Quetschventilanordnung (60) nach einem der vorhergehenden Ansprüche.

12. Verwendung einer Quetschventilanordnung (60) nach einem der Ansprüche 1 bis 10 in einem Lebensmittelabgabegerät (10), insbesondere ein Getränkeabgabegerät oder ein Getränkezubereitungsgerät.

## Revendications

1. Agencement de vanne à manchon (60) agencé pour être utilisé dans un circuit hydraulique (30), l'agencement de vanne à manchon (60) comprenant:
- une conduite de fluide déformable au moins en section (98),
- une unité de pincement (64) comprenant un élément d'engagement (90) qui est agencé pour engager et déformer une partie de soupape définie (102) de la conduite de fluide (98) pour contrôler un écoulement de fluide à travers la conduite de fluide (98), et
- une saillie d'engagement (92) au niveau de l'élément d'engagement (90), dans lequel la saillie d'engagement (92) occupe une sous-section d'une extension longitudinale de l'élément d'engagement (90), dans lequel une direction d'extension principale de la saillie d'engagement (92) est perpendiculaire à la dimension longitudinale de l'élément d'engagement (90), **caractérisé en ce que** l'élément d'engagement (90) comprend en outre une section décalée (94) qui est déplacée vers l'arrière depuis la saillie d'engagement (92), et dans lequel la saillie d'engagement (92) est agencée à une extrémité aval de l'élément d'engagement (90), dans lequel la section décalée (94) est agencée comme une aide au désengagement, et dans lequel, dans un état engagé de l'élément d'engagement (90), une déformation de la partie de soupape (102) sur un côté pressurisé de celle-ci pousse la section décalée (94) et ainsi l'élément d'engagement (90) dans un état désengagé.

2. Agencement (60) selon la revendication 1, comprenant en outre un boîtier de vanne (62) dans lequel un évidement de montage (112, 114) est formé, dans lequel sur un côté de l'évidement de montage (112, 114) qui est opposé à l'élément d'engagement (90) est formée une saillie fixe (116) qui est adaptée à la saillie d'engagement (92) de l'élément d'engagement (90), la partie de soupape (102) étant serrée, au moins dans l'état engagé, entre la saillie d'engagement (92) et la saillie fixe (116).

3. Agencement (60) selon la revendication 1 ou 2, comprenant en outre une section transversale non circulaire (108) dans la partie de soupape (102) qui est agencée dans l'évidement de montage (112, 114).

4. Agencement (60) selon la revendication 3, dans lequel la section transversale non circulaire (108) dans la partie de soupape (102) est une section transversale aplatie.

5. Agencement (60) selon l'une quelconque des revendications précédentes, dans lequel la partie de soupape (102) de la conduite de fluide (98) est une section préformée d'un tuyau (100) ayant une section transversale généralement circulaire (120, 122).

6. Agencement (60) selon la revendication 5, dans lequel au moins une section de forme différente (104, 106) du tuyau qui est adjacente à la partie de valve (102) comprend une section transversale circulaire (120, 122).

7. Agencement (60) selon l'une quelconque des revendications précédentes, dans lequel la partie de valve (102) comprend, dans un état non sollicité, une section transversale interne ovale ou arrondie (108), et dans lequel une extension principale de la croix interne de la section (108) est perpendiculaire à une direction de fonctionnement de l'élément d'engagement (90) de l'unité de pincement (64).

8. Agencement (60) selon l'une quelconque des revendications précédentes, dans lequel, dans un état non sollicité, les rayons minimaux de la section transversale non circulaire (108) sont plus petits que les rayons correspondants dans une région adjacente de la conduite de fluide (98).

9. Agencement (60) selon l'une quelconque des revendications précédentes, dans lequel la saillie d'engagement (92) est une arête s'étendant latéralement ayant une extension principale qui est fondamentalement perpendiculaire à une direction d'écoulement de la conduite de fluide (98) dans la partie de valve (102).

10. Agencement (60) selon l'une quelconque des revendications précédentes, comprenant en outre un actionneur (66) qui est agencé pour actionner l'élément d'engagement (90) entre un état engagé et un état désengagé, dans lequel un écoulement à travers la conduite de fluide (98) est bloqué dans l'état engagé, et dans lequel un écoulement à travers la conduite de fluide (98) est autorisé dans l'état désengagé.

11. Appareil de distribution de produits alimentaires (10) comprenant un circuit hydraulique (30) incorporant au moins un agencement de vanne à manchon (60) selon l'une quelconque des revendications précédentes.

12. Utilisation d'un agencement de vanne à manchon (60) selon l'une quelconque des revendications 1 à 10 dans un appareil de distribution d'aliments (10), en particulier un appareil de distribution de boissons ou un appareil de préparation de boissons.
